# EUROPEAN PATENT APPLICATION

(11) **EP 4 629 063 A1**
(43) Date of publication of application: **08.10.2025**
(21) Application number: 22966864.5
(22) Date of filing: 30.11.2022
(51) Int. Cl.: G06F 8/71

(54) **VERIFICATION METHOD AND APPARATUS FOR COMMUNICATION NODES IN COMMUNICATION MODEL**

(71) Applicant: Shenzhen Yinwang Intelligent Technologies Co., Ltd., Shenzhen, Guangdong 518129 (CN)
(72) Inventor: SUN, Dayu, Shenzhen, Guangdong 518129 (CN); LIU, Hanzhao, Shenzhen, Guangdong 518129 (CN); HU, Yong, Shenzhen, Guangdong 518129 (CN)
(74) Representative: Maiwald GmbH
(86) International application number: PCT/CN2022/135680
(87) International publication number: WO 2024/113273

(57) **Abstract**

This application provides a method and an apparatus for verifying a communication node in a communication model. The communication node includes a service providing node and a service consumption node. The method includes: A verification apparatus obtains first configuration information from a configuration file of the communication model, where the first configuration information includes information configured for implementing communication between the service providing node and the service consumption node; and the verification apparatus outputs prompt information based on the first configuration information and a preset configuration requirement, where the prompt information indicates whether the service providing node and the service consumption node are capable of normally communicating with each other, and the preset configuration requirement includes a configuration requirement that is for implementing a communication function between the service providing node and the service consumption node and that is specified in a system architecture standard to which the communication model is applied. The system architecture standard is an automotive open system architecture AUTOSAR, and the configuration file of the communication model is an ARXML file. This method can be used to verify whether the service providing node and the service consumption node in the communication model normally communicate with each other.

## Description

### TECHNICAL FIELD

This application relates to the field of automobile technologies, and in particular, to a method and an apparatus for verifying a communication node in a communication model.

### BACKGROUND

In an application development process based on an automotive open system architecture (automotive open system architecture, AUTOSAR) standard, when designing, based on the AUTOSAR standard, a communication model that can implement a specific function, each vendor may design communication between a service providing node and a service consumption node. The service providing node is a communication node that provides a service, and the service consumption node is a communication node that uses the service.

However, when the communication model including the service providing node and the service consumption node is designed, when the communication model is used, it is found that the service providing node and the service consumption node still cannot normally communicate with each other.

Therefore, after the communication model is designed, how to verify whether the service providing node and the service consumption node normally communicate with each other, to obtain, based on a verification result, a communication model in which the service providing node and the service consumption node are capable of normally communicating with each other becomes a technical problem to be urgently resolved.

### SUMMARY

This application provides a method and an apparatus for verifying a communication node in a communication model, to verify whether a service providing node and a service consumption node normally communicate with each other.

According to a first aspect, this application provides a method for verifying a communication node in a communication model, where the communication node includes a service providing node and a service consumption node, and the method includes: A verification apparatus obtains first configuration information from a configuration file of the communication model, where the first configuration information includes information configured for implementing communication between the service providing node and the service consumption node; and the verification apparatus outputs prompt information based on the first configuration information and a preset configuration requirement, where the prompt information indicates whether the service providing node and the service consumption node are capable of normally communicating with each other, and the preset configuration requirement includes a configuration requirement that is for implementing a communication function between the service providing node and the service consumption node and that is specified in a system architecture standard to which the communication model is applied.

The system architecture standard is an automotive open system architecture AUTOSAR, and the configuration file of the communication model is an ARXML file.

The service providing node is a communication node that provides a service, and the service consumption node is a communication node that uses the service.

When verifying whether the service providing node and the service consumption node in the communication model can normally communicate with each other, the verification apparatus obtains, from the ARXML file of the communication model, information (namely, the first configuration information) configured for implementing the communication function between the service providing node and the service consumption node. In other words, it may be considered that the verification apparatus obtains, from the ARXML file of the communication model, some configuration information associated with the communication between the service providing node and the service consumption node, then verifies, based on the first configuration information and the configuration requirement that is for implementing the communication function between the service providing node and the service consumption node and that is specified in the system architecture standard to which the communication model is applied, whether the service providing node and the service consuming node can normally communicate with each other and outputs the prompt information to a user to indicate whether the service providing node and the service consumption node can normally communicate with each other.

With reference to the first aspect, in a possible implementation, the method further includes: The verification apparatus receives first information, where the first information indicates at least one communication instance pair, and each communication instance pair includes a service consumption node and a service providing node that need to communicate with each other. That the verification apparatus outputs prompt information based on the first configuration information and a preset configuration requirement includes: The verification apparatus outputs the prompt information based on the preset configuration requirement and the first configuration information corresponding to the service providing node and the service consumption node in each communication instance pair.

In this implementation, the verification apparatus may learn, based on the first information that is entered by the user on an interaction interface and that indicates the at least one communication instance pair, the service providing node and the service consumption node that need to be verified by the user.

With reference to the first aspect, in a possible implementation, the first configuration information includes configuration information of a service interface (ServiceInterface) element; and when the configuration information of the service interface element does not meet a configuration requirement that is in the AUTOSAR standard and that is preset for the configuration information of the service interface element, the prompt information specifically indicates at least one of the following information: a port and a service interface deployment need to reference a same service interface, or a service interface element needs to be configured with at least one of three communication modes: an event, a method, or a field.

It may be understood that, in this implementation, when the verification apparatus outputs this type of prompt information, the user may determine, based on the prompt information, that the service providing node and the service consumption node cannot normally communicate with each other, and that a reason why the service providing node and the service consumption node cannot normally communicate with each other may be related to the configuration information of the service interface element. Further, the user may verify, based on the prompt information, the configuration information related to the service interface element in the service providing node and the service consumption node, to obtain a correct communication model.

With reference to the first aspect, in a possible implementation, the first configuration information includes configuration information of a process design (ProcessDesign) element; and when the configuration information of the process design element does not meet a configuration requirement that is in the AUTOSAR standard and that is preset for the configuration information of the process design element, the prompt information specifically indicates that a process does not point to a process design.

It may be understood that, in this implementation, when the verification apparatus outputs this type of prompt information, the user may determine, based on the prompt information, that the service providing node and the service consumption node cannot normally communicate with each other, and that a reason why the service providing node and the service consumption node cannot normally communicate with each other may be related to the configuration information of the process design element. Further, the user may verify, based on the prompt information, the configuration information related to the process design element in the service providing node and the service consumption node, to obtain a correct communication model.

With reference to the first aspect, in a possible implementation, the first configuration information includes configuration information of an executable file (Executable) element; and when the configuration information of the executable file element does not meet a configuration requirement that is in the AUTOSAR standard and that is preset for the configuration information of the executable file element, the prompt information specifically indicates at least one of the following information: a process and a process design do not point to a same executable file, or an executable file does not have a root software component prototype aggregation element.

It may be understood that, in this implementation, when the verification apparatus outputs the prompt information, the user may determine, based on the prompt information, that the service providing node and the service consumption node cannot normally communicate with each other, and that a reason why the service providing node and the service consumption node cannot normally communicate with each other may be related to the configuration information of the executable file element. Further, the user may verify, based on the prompt information, the configuration information related to the executable file element in the service providing node and the service consumption node, to obtain a correct communication model.

With reference to the first aspect, in a possible implementation, the first configuration information includes configuration information of a service instance to port prototype mapping (ServiceInstanceToPortPrototypeMapping) element; and when the configuration information of the service instance to port prototype mapping element does not meet a configuration requirement that is in the AUTOSAR standard and that is preset for the configuration information of the service instance to port prototype mapping element, the prompt information specifically indicates at least one of the following information: an instance is not associated with a service instance to port prototype mapping, an instance is associated with one or more redundant service instance to port prototype mappings, a redundant mapping is deleted, or a service instance to port prototype mapping does not have a port prototype inexecutable instance reference aggregation element.

It may be understood that, in this implementation, when the verification apparatus outputs this type of prompt information, the user may determine, based on the prompt information, that the service providing node and the service consumption node cannot normally communicate with each other, and that a reason why the service providing node and the service consumption node cannot normally communicate with each other may be related to the configuration information of the service instance to port prototype mapping element. Further, the user may verify, based on the prompt information, the configuration information related to the service instance to port prototype mapping element in the service providing node and the service consumption node, to obtain a correct communication model.

With reference to the first aspect, in a possible implementation, the first configuration information includes configuration information of a software component type (SwComponentType) element; and when the configuration information of the software component type element does not meet a configuration requirement that is in the AUTOSAR standard and that is preset for the configuration information of the software component type element, the prompt information specifically indicates at least one of the following information: an executable file is not associated with a software component type, a service instance to port prototype mapping needs to be correctly configured with a root software component prototype to associate with an SWC, a service instance to port prototype mapping needs to be associated with a port of an SWC, or a type of a port associated with a service instance to port prototype mapping is incorrect.

It may be understood that, in this implementation, when the verification apparatus outputs this type of prompt information, the user may determine, based on the prompt information, that the service providing node and the service consumption node cannot normally communicate with each other, and that a reason why the service providing node and the service consumption node cannot normally communicate with each other may be related to the configuration information of the software component type element. Further, the user may verify, based on the prompt information, the configuration information related to the software component type element in the service providing node and the service consumption node, to obtain a correct communication model.

With reference to the first aspect, in a possible implementation, the first configuration information includes configuration information of a service instance (ServiceInstance) element; and when the configuration information of the service instance element does not meet a configuration requirement that is in the AUTOSAR standard and that is preset for the configuration information of the service instance element, the prompt information specifically indicates at least one of the following information: a provider service instance and a required service instance are of different types and need to be set to a scalable service-oriented middleware over an internet protocol IP SOME/IP type or a data distribution service DDS protocol type, instance identifiers of a provider service instance and a required service instance are inconsistent, domain identifiers of a provider service instance and a required service instance are inconsistent, or configurations of QoS files of a provider service instance and a required service instance are inconsistent.

It may be understood that, in this implementation, when the verification apparatus outputs the prompt information, the user may determine, based on the prompt information, that the service providing node and the service consumption node cannot normally communicate with each other, and that a reason why the service providing node and the service consumption node cannot normally communicate with each other may be related to the configuration information of the service instance element. Further, the user may verify, based on the prompt information, the configuration information related to the service instance element in the service providing node and the service consumption node, to obtain a correct communication model.

With reference to the first aspect, in a possible implementation, the first configuration information includes configuration information of a service interface deployment (ServiceInterfaceDeployment) element; and when the configuration information of the service interface deployment element does not meet a configuration requirement that is in the AUTOSAR standard and that is preset for the configuration information of the service interface deployment element, the prompt information specifically indicates at least one of the following information: a provider service instance and a required service instance that are associated with a service interface deployment do not reference a same service interface deployment.

It may be understood that, in this implementation, when the verification apparatus outputs this type of prompt information, the user may determine, based on the prompt information, that the service providing node and the service consumption node cannot normally communicate with each other, and that a reason why the service providing node and the service consumption node cannot normally communicate with each other may be related to the configuration information of the service interface deployment element. Further, the user may verify, based on the prompt information, the configuration information related to the service interface deployment element in the service providing node and the service consumption node, to obtain a correct communication model.

With reference to the first aspect, in a possible implementation, the first configuration information includes configuration information of a service instance to machine mapping (ServiceInstanceToMachineMapping) element; and when the configuration information of the service instance to machine mapping element does not meet a configuration requirement that is in the AUTOSAR standard and that is preset for the configuration information of the service instance to machine mapping element, the prompt information specifically indicates at least one of the following information: an instance is not associated with a service instance to machine mapping, a connector of a service instance to machine mapping cannot be mapped onto an instance, or a service instance to machine mapping is deleted or an instance is deleted from a service instance to machine mapping.

It may be understood that, in this implementation, when the verification apparatus outputs this type of prompt information, the user may determine, based on the prompt information, that the service providing node and the service consumption node cannot normally communicate with each other, and that a reason why the service providing node and the service consumption node cannot normally communicate with each other may be related to the configuration information of the service instance to machine mapping element. Further, the user may verify, based on the prompt information, the configuration information related to the service instance to machine mapping element in the service providing node and the service consumption node, to obtain a correct communication model.

With reference to the first aspect, in a possible implementation, the first configuration information includes configuration information of a process to machine mapping set (ProcessToMachineMappingSet) element; and when the configuration information of the process to machine mapping set element does not meet a configuration requirement that is in the AUTOSAR standard and that is preset for the configuration information of the process to machine mapping set element, the prompt information specifically indicates at least one of the following information: a process is not associated with a process to machine mapping set, a process is associated with a plurality of process to machine mapping sets, or an unwanted process to machine mapping is deleted.

It may be understood that, in this implementation, when the verification apparatus outputs this type of prompt information, the user may determine, based on the prompt information, that the service providing node and the service consumption node cannot normally communicate with each other, and that a reason why the service providing node and the service consumption node cannot normally communicate with each other may be related to the configuration information of the process to machine mapping set element. Further, the user may verify, based on the prompt information, the configuration information related to the process to machine mapping set element in the service providing node and the service consumption node, to obtain a correct communication model.

With reference to the first aspect, in a possible implementation, the first configuration information includes configuration information of a machine design (MachineDesign) element; and when the configuration information of the machine design element does not meet a configuration requirement that is in the AUTOSAR standard and that is preset for the configuration information of the machine design element, the prompt information specifically indicates at least one of the following information: a machine is not associated with a machine design, there is no communication connector aggregation element, or a machine design cannot configure an instance to machine mapping.

It may be understood that, in this implementation, when the verification apparatus outputs the prompt information, the user may determine, based on the prompt information, that the service providing node and the service consumption node cannot normally communicate with each other, and that a reason why the service providing node and the service consumption node cannot normally communicate with each other may be related to the configuration information of the machine design element. Further, the user may verify, based on the prompt information, the configuration information related to the machine design element in the service providing node and the service consumption node, to obtain a correct communication model.

With reference to the first aspect, in a possible implementation, the first configuration information includes configuration information of a machine (Machine) element; and when the configuration information of the machine element does not meet a configuration requirement that is in the AUTOSAR standard and that is preset for the configuration information of the machine element, the prompt information specifically indicates at least one of the following information: a process to machine mapping is not associated with a machine, or an SHM of a DDS cannot communicate with a plurality of machines.

It may be understood that, in this implementation, when the verification apparatus outputs the prompt information, the user may determine, based on the prompt information, that the service providing node and the service consumption node cannot normally communicate with each other, and that a reason why the service providing node and the service consumption node cannot normally communicate with each other may be related to the configuration information of the machine element. Further, the user may verify, based on the prompt information, the configuration information related to the machine element in the service providing node and the service consumption node, to obtain a correct communication model.

According to a second aspect, this application provides an apparatus for verifying a communication node in a communication model, where the communication node includes a service providing node and a service consumption node. The apparatus includes: an obtaining module, configured to obtain first configuration information from a configuration file of the communication model, where the first configuration information includes information configured to implement communication between the service providing node and the service consumption node; and a processing module, configured to output prompt information based on the first configuration information and a preset configuration requirement, where the prompt information indicates whether the service providing node and the service consumption node are capable of normally communicating with each other, and the preset configuration requirement includes a configuration requirement that is for implementing a communication function between the service providing node and the service consumption node and that is specified in a system architecture standard to which the communication model is applied. The system architecture standard is an automotive open system architecture AUTOSAR, and the configuration file of the communication model is an ARXML file.

With reference to the second aspect, in a possible implementation, the obtaining module is further configured to receive first information, where the first information indicates at least one communication instance pair, and each communication instance pair includes a service consumption node and a service providing node that need to communicate with each other; and the processing module is specifically configured to output the prompt information based on the preset configuration requirement and the first configuration information corresponding to the service providing node and the service consumption node in each communication instance pair.

With reference to the second aspect, in a possible implementation, the first configuration information includes configuration information of a service interface element; and when the configuration information of the service interface element does not meet a configuration requirement that is in the AUTOSAR standard and that is preset for the configuration information of the service interface element, the prompt information specifically indicates at least one of the following information: a port and a service interface deployment need to reference a same service interface, or a service interface element needs to be configured with at least one of three communication modes: an event, a method, or a field.

With reference to the second aspect, in a possible implementation, the first configuration information includes configuration information of a process design element; and when the configuration information of the process design element does not meet a configuration requirement that is in the AUTOSAR standard and that is preset for the configuration information of the process design element, the prompt information specifically indicates that a process does not point to a process design.

With reference to the second aspect, in a possible implementation, the first configuration information includes configuration information of an executable file element; and when the configuration information of the executable file element does not meet a configuration requirement that is in the AUTOSAR standard and that is preset for the configuration information of the executable file element, the prompt information specifically indicates at least one of the following information: a process and a process design do not point to a same executable file, or an executable file does not have a root software component prototype aggregation element.

With reference to the second aspect, in a possible implementation, the first configuration information includes configuration information of a service instance to port prototype mapping element; and when the configuration information of the service instance to port prototype mapping element does not meet a configuration requirement that is in the AUTOSAR standard and that is preset for the configuration information of the service instance to port prototype mapping element, the prompt information specifically indicates at least one of the following information: an instance is not associated with a service instance to port prototype mapping, an instance is associated with one or more redundant service instance to port prototype mappings, a redundant mapping is deleted, or a service instance to port prototype mapping does not have a port prototype inexecutable instance reference aggregation element.

With reference to the second aspect, in a possible implementation, the first configuration information includes configuration information of a software component type element; and when the configuration information of the software component type element does not meet a configuration requirement that is in the AUTOSAR standard and that is preset for the configuration information of the software component type element, the prompt information specifically indicates at least one of the following information: an executable file is not associated with a software component type, a service instance to port prototype mapping needs to be correctly configured with a root software component prototype to associate with an SWC, a service instance to port prototype mapping needs to be associated with a port of an SWC, or a type of a port associated with a service instance to port prototype mapping is incorrect.

With reference to the second aspect, in a possible implementation, the first configuration information includes configuration information of a service instance element; and when the configuration information of the service instance element does not meet a configuration requirement that is in the AUTOSAR standard and that is preset for the configuration information of the service instance element, the prompt information specifically indicates at least one of the following information: a provider service instance and a required service instance are of different types and need to be set to a scalable service-oriented middleware over an internet protocol IP SOME/IP type or a data distribution service DDS protocol type, instance identifiers of a provider service instance and a required service instance are inconsistent, domain identifiers of a provider service instance and a required service instance are inconsistent, or configurations of QoS files of a provider service instance and a required service instance are inconsistent.

With reference to the second aspect, in a possible implementation, the first configuration information includes configuration information of a service interface deployment element; and when the configuration information of the service interface deployment element does not meet a configuration requirement that is in the AUTOSAR standard and that is preset for the configuration information of the service interface deployment element, the prompt information specifically indicates at least one of the following information: a provider service instance and a required service instance that are associated with a service interface deployment do not reference a same service interface deployment.

With reference to the second aspect, in a possible implementation, the first configuration information includes configuration information of a service instance to machine mapping element; and when the configuration information of the service instance to machine mapping element does not meet a configuration requirement that is in the AUTOSAR standard and that is preset for the configuration information of the service instance to machine mapping element, the prompt information specifically indicates at least one of the following information: an instance is not associated with a service instance to machine mapping, a connector of a service instance to machine mapping cannot be mapped onto an instance, or a service instance to machine mapping is deleted or an instance is deleted from a service instance to machine mapping.

With reference to the second aspect, in a possible implementation, the first configuration information includes configuration information of a process to machine mapping set element; and when the configuration information of the process to machine mapping set element does not meet a configuration requirement that is in the AUTOSAR standard and that is preset for the configuration information of the process to machine mapping set element, the prompt information specifically indicates at least one of the following information: a machine is not associated with a machine design, there is no communication connector aggregation element, or a machine design cannot configure an instance to machine mapping.

With reference to the second aspect, in a possible implementation, the first configuration information includes configuration information of a machine design element; and when the configuration information of the machine design element does not meet a configuration requirement that is in the AUTOSAR standard and that is preset for the configuration information of the machine design element, the prompt information specifically indicates at least one of the following information: there is no communication connector aggregation element, or a machine design cannot configure an instance to machine mapping.

With reference to the second aspect, in a possible implementation, the first configuration information includes configuration information of a machine element; and when the configuration information of the machine element does not meet a configuration requirement that is in the AUTOSAR standard and that is preset for the configuration information of the machine element, the prompt information specifically indicates at least one of the following information: a process to machine mapping is not associated with a machine, or an SHM of a DDS cannot communicate with a plurality of machines.

According to a third aspect, this application provides an apparatus for verifying a communication node in a communication model, including a memory and a processor. The memory is configured to store program instructions, and the processor is configured to invoke the program instructions in the memory to perform the method according to any one of the first aspect or the possible implementations of the first aspect.

According to a fourth aspect, this application provides a computer-readable medium. The computer-readable medium stores program code used to be executed by a computer, and the program code includes instructions used to perform the method according to any one of the first aspect or the possible implementations of the first aspect.

According to a fifth aspect, this application provides a chip, including at least one processor and a communication interface. The communication interface and the at least one processor are interconnected through a line, and the at least one processor is configured to run a computer program or instructions, to perform the method according to any one of the first aspect or the possible implementations of the first aspect.

According to a sixth aspect, this application provides a computer program product. The computer program product includes computer program instructions. When the computer program instructions are run on a computer, the computer is enabled to implement the method according to any one of the first aspect or the possible implementations of the first aspect.

For technical effects brought by any one of the implementations of the second aspect to the sixth aspect, refer to technical effects brought by any one of the possible implementations of the first aspect. Details are not described.

### BRIEF DESCRIPTION OF DRAWINGS

FIG. 1 is a schematic flowchart of an application development process according to this application;
FIG. 2 is a diagram of a structure of a designed application model according to an embodiment of this application;
FIG. 3 is a schematic flowchart of a method for verifying a communication node in a communication model according to an embodiment of this application;
FIG. 4 is a diagram of configuration information related to a communication function between a service providing node and a service consumption node according to an embodiment of this application;
FIG. 5 is a diagram of a structure of an apparatus for verifying a communication node in a communication model according to an embodiment of this application; and
FIG. 6 is a diagram of a structure of an apparatus for verifying a communication node in a communication model according to another embodiment of this application.

### DESCRIPTION OF EMBODIMENTS

In the automotive field, to improve update and exchange of automotive electronic system software and manage increasingly complex automotive electronic software system more conveniently and effectively, since 2003, global automotive manufacturers, automotive parts suppliers, and automotive electronic software system companies have jointly established an open software architecture standardization solution in line with automotive electronic software development: an automotive open system architecture (automotive open system architecture, AUTOSAR). The AUTOSAR is a summary of the experience in automotive technologies developed for more than 100 years, and aims to create and establish an open and standardized software architecture for automotive electronic control units, including scalability for different vehicle and platform variants, software transferability, usability and safety requirements considerations, collaboration between different partners, sustainable use of natural resources, and maintainability in a product life cycle.

Generally, in an application development process based on the AUTOSAR standard, when a vehicle needs to implement a function, an application model that can implement a specific function is first designed, and after the application model is designed, a system description file (ARXML file) in an AUTOSAR XML format used to describe the application model is generated. For example, when the vehicle needs to implement some vehicle light control functions, an application model that can implement the vehicle light control functions is designed, and an ARXML file of the application model is generated after the application model is designed. The ARXML file and the application model are essentially used to express the same information, but in different forms. The foregoing application model for the vehicle light control function and the ARXML file corresponding to the application model for the vehicle light control function are used as an example. When the ARXML file corresponding to the application model for the vehicle light control function is distributed to a supplier, the supplier may obtain the application model for the vehicle light control function based on the ARXML file.

After an application model that can implement a specific function is designed, the designed application model is usually verified to ensure that the designed application model is correct, to provide a good basis for subsequent development. Specifically, after an application model that can implement a specific function is designed, whether the designed application model is correct is determined by verifying an ARXML file corresponding to the application model.

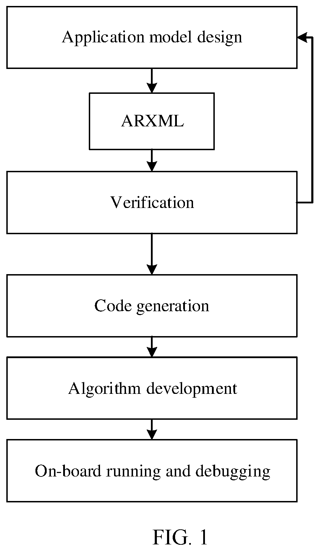

For example, FIG. 1 is a schematic flowchart of an application development process according to this application. As shown in FIG. 1, after an application model is designed, an ARXML file corresponding to the application model is obtained, and then the ARXML file is verified, to ensure that a problem can be found in a design phase of the application model and the problem can be corrected. After the verification is complete, the correct application model may be used to generate code. After the code is generated, service logic code may be embedded to complete algorithm development. Finally, the developed code may be debugged on a board and run in a service environment.

Currently, when the application model is verified, syntax correctness, configuration integrity, and semantic correctness of the ARXML file corresponding to the application model are mainly verified. The syntax correctness refers to verifying whether the ARXML file meets a syntax requirement of an ARXML rule. The configuration integrity refers to verifying whether a mandatory element required in the AUTOSAR standard is missing. The semantic correctness refers to verifying whether some configuration specifications are met.

However, it should be understood that a design process of the application model usually includes a design of communication between a service providing node and a service consumption node. The service providing node is a communication node that provides a service, and the service consumption node is a communication node that uses the service. In this case, after the application model is designed, it is a top concern of a user to ensure that communication nodes in the application model are capable of normally communicating with each other.

However, after the syntax correctness, configuration integrity, and semantic correctness of the ARXML file are verified, the application model corresponding to the ARXML file may still have a problem that the service providing node and the service consumption node cannot normally communicate with each other.

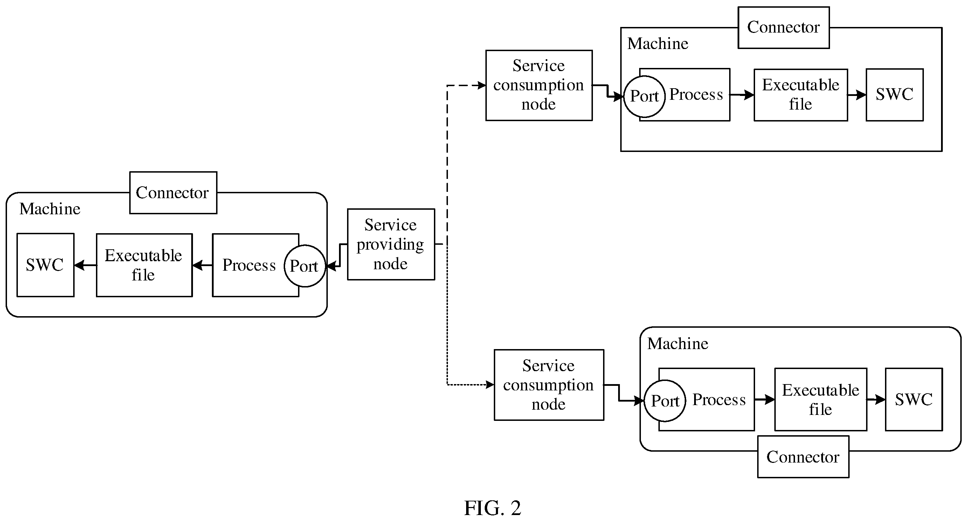

For example, FIG. 2 is a diagram of a structure of a designed application model according to an embodiment of this application. As shown in FIG. 2, the application model includes one service providing node and two service consumption nodes. The service providing node needs to provide services for the two service consumption nodes. Each communication node is associated with a machine (Machine), a software component (software component, SWC), an executable file (Executable), a process (process), an internal communication port (Port), and a connector (Connector).

Specifically, the Machine is a deployment location of a communication node, and is usually a system-on-a-chip (system-on-a-chip, SoC). The SWC is a component type design model of a communication node. The Executable is a binary design model of a communication node. The process is a deployment design model of a communication node. The Connector is a port of the Machine for external communication, and is usually a network adapter.

It should be understood that, in the application model in which the service providing node needs to provide the services for the two service consumption nodes shown in FIG. 2, if the service providing node needs to provide the services for the two service consumption nodes, a prerequisite is that the service providing node can normally communicate with the two service consumption nodes. However, in an existing manner of verifying syntax correctness, configuration integrity, and semantic correctness of an ARXML file, whether the service providing node normally communicates with the two service consumption nodes cannot be verified.

In addition, it should be further understood that, if whether the service providing node normally communicates with the two service consumption nodes cannot be verified in a design phase of the application model, once the syntax correctness, configuration integrity, and semantic correctness of the ARXML file are verified, subsequent code generation, algorithm development, and final deployment on a board for debugging are performed. In this case, if the application model design is omitted or incorrect, it may be sensed, only after the application model is deployed on the board for debugging, that the service providing node and the service consumption node cannot normally communicate with each other. In this case, the design needs to be modified, causing a large amount of rework and low efficiency.

In view of this, this application provides a method and an apparatus for verifying a communication node in an application model (communication model), so that after the communication model is designed, whether a service providing node and a service consumption node normally communicate with each other can be verified. In this way, a developer can correct an original application model based on a verification result to obtain an application model in which the service providing node and the service consumption node can normally communicate with each other, and then perform a subsequent development process.

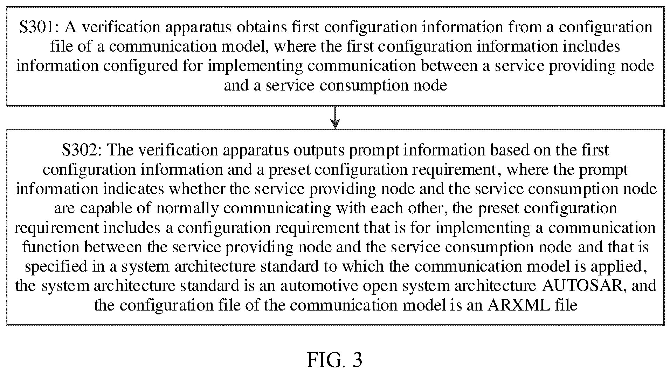

FIG. 3 is a schematic flowchart of a method for verifying a communication node in a communication model according to an embodiment of this application. As shown in FIG. 3, the verification method includes S301 and S302.

S301: A verification apparatus obtains first configuration information from a configuration file of the communication model, where the first configuration information includes information configured for implementing communication between a service providing node and a service consumption node.

In this embodiment, the verification apparatus is an apparatus that can verify whether the communication node in the communication model can perform normal communication. In this application, the verification apparatus may also be referred to as a verification module.

In this embodiment, the communication model includes a pair of a service providing node and a service consumption node that need to communicate with each other. The service providing node is a communication node that provides a service, and the service consumption node is a communication node that uses the service.

In this embodiment, the configuration file of the communication model refers to a file used to describe the communication model. In other words, the corresponding communication model may be obtained based on the configuration file of the communication model.

In this embodiment, the configuration file of the communication model is a file that conforms to an ARXML format, and is usually an ARXML file.

It should be understood that, when a communication model is designed, if communication needs to be performed between a service providing node and a service consumption node in the communication model, a corresponding ARXML file needs to include configuration information used to implement communication.

For example, for communication between a service providing node and a service consumption node, the following configuration related to the communication may need to be included:

### (1) Interface-related configuration

A service interface (ServiceInterface) is used to define a communication mode required by a service and a data type required by each communication mode. The communication mode required by the service includes any one or more of the following: an event (Event), a method (Method), and a field (Field).

### (2) Port-related configuration

An adaptive application software component type (AdaptiveApplicationSwComponentType) is used to define a receiving port and a sending port.

An executable file (Executable) is used to configure a referenced AdaptiveApplicationSwComponentType.

A process design (ProcessDesign) is used to configure a referenced Executable.

A process (Process) is used to configure a referenced Executable and a ProcessDesign.

A service instance to port prototype mapping (ServiceInstancetoPortPrototypeMapping) is used to establish a mapping between a ServiceInstance and a Port.

### (3) Communication instance-related configuration

A service instance (ServiceInstance) is used to configure a data distribution service (data distribution service, DDS) protocol, define a domain identifier (DomainId), and set a service instance ID (serviceinstance Id). If a scalable service-oriented middleware over IP (Scalable Service-Oriented Middleware over IP, SOME/IP) protocol is used, a DomainId does not need to be set.

A service interface deployment (ServiceInterfaceDeployment) is used to configure a referenced ServiceInterface and bind a protocol like a DDS and an SOME/IP.

A service instance to machine mapping (ServiceInstanceToMachineMapping) is used to establish a mapping between a ServiceInstance and a Machine, that is, a mapping between the ServiceInstance and an EthernetCommunicationConnector.

### (4) Machine-related configuration

A process to machine mapping set (ProcessToMachineMappingSet) is used to establish a mapping between a Process and a Machine.

An Ethernet cluster (EthernetCluster) is used to define a network configuration like an IP and a subnet mask.

A machine design (MachineDesign) is used to define an Ethernet communication connector (EthernetCommunicationConnector) and a service discovery IP.

A Machine configures a referenced MachineDesign.

It may be further understood that, if some configurations that are used to implement communication and that are included in the corresponding configuration file in the communication model do not meet a rule followed when the service providing node and the service consumption node communicate with each other, communication between the service providing node and the service consumption node may be affected. For example, when the service providing node and the service consumption node communicate with each other, serviceinstance Ids of the service providing node and the service consumption node need to be the same and the communication protocols used by the service providing node and the service consumption node need to match.

In view of this, in this application, after determining the service providing node and the service consumption node that are in the communication model and on which whether normal communication can be performed needs to be verified, to verify whether the service providing node and the service consumption node are capable of normally communicating with each other, the verification apparatus first extracts the first configuration information from the configuration file of the communication model, to verify whether the service providing node and the service consumption node can normally communicate with each other.

The first configuration information is the information configured in the ARXML file for implementing communication between the service providing node and the service consumption node.

Alternatively, in other words, the first configuration information may be considered as some configuration information that is in the ARXML file and that is related to communication between the service providing node and the service consumption node, instead of any piece of information in the ARXML file.

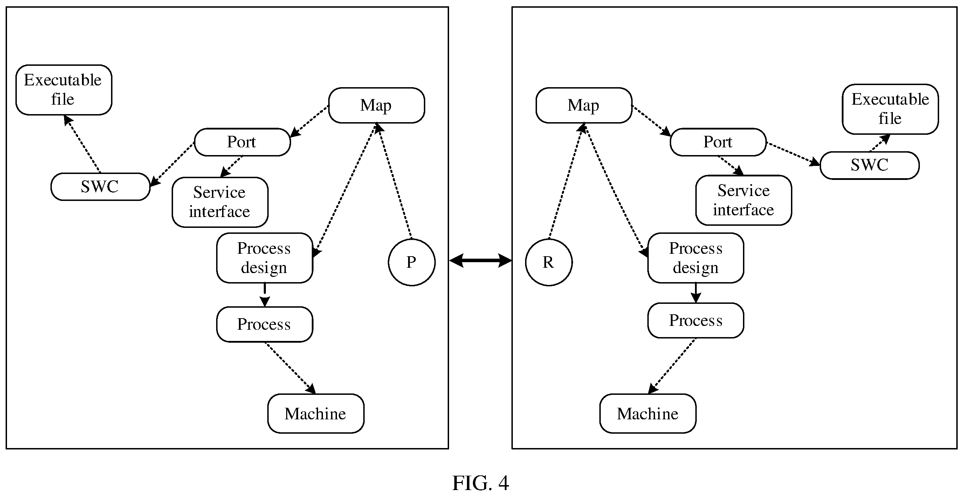

For example, as shown in FIG. 4, the first configuration information obtained from the corresponding ARXML file is at least one of the following configuration information:

Service interface-related configuration information specifically includes configuration information related to a service interface associated with the service providing node (P in FIG. 4) and configuration information related to a service interface associated with the service consumption node (R in FIG. 4) shown in FIG. 4.

Port-related configuration information specifically includes configuration information related to a port associated with the service providing node and configuration information related to a port associated with the service consumption node shown in FIG. 4. More specifically, the port-related configuration information includes configuration information of a process design, configuration information of an executable file, configuration information of an SWC, and configuration information of a service instance to port type mapping (that is, the mapping in FIG. 4).

Communication instance-related configuration specifically includes configuration information related to the service providing node and configuration information related to the service consumption node shown in FIG. 4.

Machine-related configuration information specifically includes configuration information related to a Machine associated with the service providing node and configuration information related to a Machine associated with the service consumption node shown in FIG. 4.

It may be understood that, because the first configuration information is information that is in the configuration file of the communication model and that is associated with a communication function between the service providing node and the service consumption node, when the configuration of the first configuration information does not comply with a rule that needs to be followed, communication between the service providing node and the service consumption node is affected. Therefore, in this application, the first configuration information is also referred to as configuration information that affects communication between the service providing node and the service consumption node.

S302: The verification apparatus outputs prompt information based on the first configuration information and a preset configuration requirement, where the prompt information indicates whether the service providing node and the service consumption node are capable of normally communicating with each other, the preset configuration requirement includes a configuration requirement that is for implementing the communication function between the service providing node and the service consumption node and that is specified in a system architecture standard to which the communication model is applied, the system architecture standard is an automotive open system architecture AUTOSAR, and the configuration file of the communication model is an ARXML file.

The system architecture standard to which the communication model is applied may be considered as a standard that needs to be complied with when the communication model is designed. Specifically, in this embodiment, the system architecture standard to which the communication model is applied is the automotive open system architecture AUTOSAR.

It may be understood that, if the service providing node and the service consumption node are capable of normally communicating with each other, some specified configuration requirements need to be met. For example, when the service providing node and the service consumption node are capable of normally communicating with each other, the service providing node and the service consumption node need to meet the configuration requirements, for example, service instance IDs (serviceinstance Ids) of the service providing node and the service consumption node are the same and the communication protocols used by the service providing node and the service consumption node need to match.

It may be further understood that, for a communication model, if some configuration information that is used to implement communication and that is included in a configuration file in the communication model does not meet a rule followed when the service providing node and the service consumption node communicate with each other, communication between the service providing node and the service consumption node may be affected. Therefore, in this embodiment, after the first configuration information is obtained, the prompt information is output based on the first configuration information and the configuration requirement that is for implementing the communication function between the service providing node and the service consumption node and that is specified in the AUTOSAR standard to which the communication model is applied, so as to verify whether the service providing node and the service consumption node in the communication model can normally communicate with each other. The prompt information indicates whether the service consumption node and the service providing node are capable of normally communicating with each other.

For example, verification in the following aspects may be included:

### 1. Interface-level configuration information verification

Generally, when the communication model is designed based on the AUTOSAR standard, as shown in Table 1, the configuration information of the service interface (ServiceInterface) element in the ARXML file corresponding to the communication model includes two cases.

A first case is that the ServiceInterface element is associated with a service interface deployment (ServiceInterfaceDeployment) element and a service instance to port prototype mapping (ServiceInstanceToPortPrototypeMapping) element. In this case, a configuration requirement includes: A port of a service providing node (namely, a port of P), a port of a service consumption node (namely, a port of R), and a ServiceInterfaceDeployment need to reference a same ServiceInterface.

A second case is that the ServiceInterface element is not associated with another element. In this case, a configuration requirement includes: At least one data type is configured in configuration information of the ServiceInterface element.

It should be understood that, when the first configuration information in this application includes the configuration information of the service interface element, if the first configuration information does not meet any one of the configuration requirements of the ServiceInterface, the service providing node and the service consumption node cannot normally communicate with each other.

Therefore, as shown in Table 1, in this embodiment, when the ServiceInterface element is associated with the service interface deployment and the service instance to port prototype mapping element, if the configuration requirement that the port of the service providing node (namely, the port of P), the port of the service consumption node (namely, the port of R), and the ServiceInterfaceDeployment need to reference the same ServiceInterface is not met, the following prompt information is output: a port and a service interface deployment need to reference a same service interface (a Port and the corresponding ServiceInterfaceDeployment shall reference the same ServiceInterface).

When the ServiceInterface element is not associated with another element, if at least one data type is not configured in the configuration information of the ServiceInterface element, the following prompt information is output: a ServiceInterface needs to be configured with at least one of the following communication modes: an event, a method, and a field (The ServiceInterface needs to be configured with at least one communication mode: Event, Method or Field).

**Table 1**

| Verification element | Associated element | Configuration requirement | Error prompt information |
|---|---|---|---|
| ServiceInter face | ServiceInterfaceDeployment ServiceInstanceToPortPrototy peMapping | A Port of P, a Port of R, and a ServiceInterfaceDeployment reference a same ServiceInterface | A port and a service interface deployment need to reference a same service interface |
| | | A ServiceInterface is configured with at least one data type | A ServiceInterface needs to be configured with at least one of the following communication modes: an event, a method, and a field |

In other words, in this embodiment, when the configuration information of the service interface element does not meet the configuration requirement preset for the configuration information of the service interface element, the prompt information may include at least one of the following prompt information: a port and a service interface deployment need to reference a same service interface, or a service interface element needs to be configured with at least one of three communication modes: an event, a method, or a field.

It may be understood that, after receiving this type of prompt information, the user may determine that a reason why the service providing node and the service consumption node cannot communicate with each other may be the configuration information of the service interface element. Further, the communication model may be corrected by verifying the configuration information that is in the service providing node and the service consumption node and that is related to the service interface element, to obtain a correct communication model.

### 2. Port-level verification

Generally, when the communication model is designed based on the AUTOSAR standard, a port-level element that affects communication and that is in the ARXML file of the communication model includes, for example, configuration information of a process design (ProcessDesign) element, configuration information of an executable file (Executable) element, configuration information of a service instance to port prototype mapping (ServiceInstanceToPortPrototypeMapping) element, and configuration information of a software component type (SwComponentType) element.
(1) For the configuration information of the ProcessDesign element, as shown in Table 2, a configuration requirement includes: When a process design element is associated with a process (Process) element, a process needs to point to a process design.

It may be understood that, when the first configuration information in this application includes the configuration information of the process design element, if the configuration information of the process design does not meet the configuration requirement of the process design, the service providing node and the service consumption node cannot normally communicate with each other.

Therefore, as shown in Table 2, in this embodiment, if the configuration information of the process design does not meet the configuration requirement of the process design, the following prompt information is output: a process does not point to a process design (The Process is not associated with a ProcessDesign).

**Table 2**

| Verification element | Associated element | Configuration requirement | Error prompt information |
|---|---|---|---|
| ProcessDesign | Process | A Process points to a ProcessDesign | A process does not point to a process design |

It may be understood that, after receiving this type of prompt information, the user may further determine that a reason why the service providing node and the service consumption node cannot communicate with each other may be that a process does not point to a process design. Further, the communication model may be corrected by verifying whether the process points to the process design, to obtain a correct communication model.

(2) For the configuration information of the Executable element, as shown in Table 3, a configuration requirement includes: When the Executable element is associated with a Process element and a ProcessDesign element, the Process and the ProcessDesign need to point to a same Executable; or when the Executable element is not associated with another element, the Executable needs to include a root software component prototype (RootSwComponentPrototype).

It may be understood that, when the first configuration information in this application includes the configuration information of the Executable element, if the configuration information of the Executable element does not meet the configuration requirement for the configuration information of the Executable element, the service providing node and the service consumption node cannot normally communicate with each other. Therefore, as shown in Table 3, in this embodiment, when the Executable element is associated with the Process and the ProcessDesign element, if that the Process and the ProcessDesign need to point to a same Executable is not met, the following prompt information is output: a process and a process design do not point to a same executable file (The Process and the corresponding ProcessDesign are not associated with the same Executable).

When the Executable element is not associated with another element, if the Executable does not include the root software component prototype, the following prompt information is output: an executable file does not have a root software component prototype aggregation element (The Executable does not have the RootSwComponentPrototype aggregation element).

**Table 3**

| Verification element | Associated element | Configuration requirement | Error prompt information |
|---|---|---|---|
| Executable | Process ProcessDesign | A Process and a ProcessDesign need to point to a same Executable | A process and a process design do not point to a same executable file |
| | | An Executable needs to include a root software component prototype | An executable file does not have a root software component prototype aggregation element |

In other words, when the configuration information of the executable file does not meet the configuration requirement that is in the AUTOSAR standard and that is preset for the configuration information of the executable file element, the prompt information may further include at least one of the following information: a process and a process design do not point to a same executable file, or an executable file does not have a root software component prototype aggregation element.

It may be understood that, after receiving this type of prompt information, the user may determine that a reason why the service providing node and the service consumption node cannot communicate with each other may alternatively be caused by the configuration information of the Executable element. Further, the communication model may be corrected by verifying the configuration information related to the Executable element in the service providing node and the service consumption node, to obtain a correct communication model.

(3) For the configuration information of the service instance to port prototype mapping element, as shown in Table 4, a configuration requirement includes: When the service instance to port prototype mapping element is associated with a service instance (ServcieInstance) element and a process design (ProcessDesign) element, the service instance to port prototype mapping needs to point to the ProcessDesign and the ServcieInstance exists and is unique; or when the service instance to port prototype mapping is not associated with another element, a port prototype inexecutable instance reference (PortPrototypeInExecutableInstanceRef) aggregation element of the service instance to port prototype mapping needs to exist.

It may be understood that, when the first configuration information in this application includes the configuration information of the service instance to port prototype mapping element, if the configuration information of the ServiceInstanceToPortPrototypeMapping element does not meet the configuration requirement for the configuration information of the ServiceInstanceToPortPrototypeMapping element, the service providing node and the service consumption node cannot normally communicate with each other.

Therefore, as shown in Table 4, in this embodiment, when the ServiceInstanceToPortPrototypeMapping element is associated with the service instance (ServcieInstance) element and the process design (ProcessDesign) element, if that the service instance to port prototype mapping needs to point to the ProcessDesign and the ServcieInstance exists and is unique is not met, the following prompt information is output: an instance is not associated with a service instance to port prototype mapping, an instance is associated with one or more redundant service instance to port prototype mappings, or a redundant mapping is deleted (The instance is not associated with a ServiceInstanceToPortPrototypeMapping. The instance is associated with one or more redundant ServiceInstanceToPortPrototypeMappings. Delete the redundant Mappings).

When the ServiceInstanceToPortPrototypeMapping element is not associated with another element, if a PortPrototypeInExecutableInstanceRef aggregation element of the service instance to port prototype mapping does not exist, the following prompt information is output: a service instance to port prototype mapping does not have a port prototype inexecutable instance reference aggregation element (The ServiceInstanceToPortPrototypeMapping does not have the PortPrototypeInExecutableInstanceRef aggregation element).

**Table 4**

| Verification element | Associated element | Configuration requirement | Error prompt information |
|---|---|---|---|
| ServiceInstanceToPort PrototypeMapping | ServcieInstance ProcessDesign | A service instance to port prototype mapping needs to point to a ProcessDesign and a ServcieInstance exists and is unique | An instance is not associated with a service instance to port prototype mapping, an instance is associated with one or more redundant service instance to port prototype mappings, or a redundant mapping is deleted |
| | | A PortPrototypeInExecu tableInstanceRef aggregation element of a service instance to port prototype mapping needs to exist | A service instance to port prototype mapping does not have a PortPrototypeInExecutab leInstanceRef aggregation element |

In other words, when the configuration information of the service instance to port prototype mapping element does not meet the configuration requirement that is in the AUTOSAR standard and that is preset for the service instance to port prototype mapping element, the prompt information may further include at least one of the following information: an instance is not associated with a service instance to port prototype mapping, an instance is associated with one or more redundant service instance to port prototype mappings, a redundant mapping is deleted, or a service instance to port prototype mapping does not have a port prototype inexecutable instance reference aggregation element.

It may be understood that, after receiving this type of prompt information, the user may determine that a reason why the service providing node and the service consumption node cannot communicate with each other may alternatively be caused by the configuration information of the ServiceInstanceToPortPrototypeMapping element. Further, the communication model may be corrected by verifying the configuration information related to the ServiceInstanceToPortPrototypeMapping element in the service providing node and the service consumption node, to obtain a correct communication model.

(4) For the configuration information of the SwComponentType element, as shown in Table 5, a configuration requirement includes: When a software component type element is associated with an executable file (Executable) element, a root software component prototype (RootSwcPrototype) aggregation element of the Executable needs to point to an SWC (root SWC); when the SwComponentType element is associated with a service instance to port prototype mapping (ServiceInstanceToPortPrototypeMapping) and an SWC to which the root software component prototype points, an SWC referenced by a port prototype inexecutable instance reference (PortPrototypeInExecutableInstanceRef) aggregation element under the ServiceInstanceToPortPrototypeMapping is the specified root SWC; when the SwComponentType element is associated with the PortPrototypeInExecutableInstanceRef and another SWC, a port to which the PortPrototypeInExecutableInstanceRef points needs to be mounted on the SWC; and when the SwComponentType element is associated with the PortPrototypeInExecutableInstanceRef and the ServiceInstance, a type of the port to which the PortPrototypeInExecutableInstanceRef points needs to be consistent with a type of the ServiceInstance.

It may be understood that, when the first configuration information in this application includes the configuration information of the SwComponentType element, if the configuration information of the SwComponentType element does not meet the configuration requirement for the configuration information of the SwComponentType element, the service providing node and the service consumption node cannot normally communicate with each other.

Therefore, as shown in Table 5, in this embodiment, when the software component type element is associated with the Executable element, if that the root software component prototype (RootSwcPrototype) aggregation element of the Executable needs to point to an SWC (root SWC) is not met, the following prompt information is output: an executable file is not associated with a software component type (The Executable is not associated with an SwComponentType).

When the SwComponentType element is associated with the SWC to which the ServiceInstanceToPortPrototypeMapping and the root software component prototype point, if that the SWC referenced by the PortPrototypeInExecutableInstanceRef aggregation element under the ServiceInstanceToPortPrototypeMapping is the specified root SWC is not met, the following prompt information is output: a service instance to port prototype mapping needs to be correctly configured with a root software component prototype to associate with an SWC (a ServiceInstanceToPortPrototypeMapping shall be configured with a RootSwComponentPrototype correctly to associate with the following SWCS).

When the SwComponentType element is associated with the PortPrototypeInExecutableInstanceRef and another SWC, if that the Port to which the PortPrototypeInExecutableInstanceRef points needs to be mounted on the SWC is not met, the following prompt information is output: a service instance to port prototype mapping needs to be associated with a port of an SWC (a ServiceInstanceToPortPrototypeMapping shall be associated with a Port of the following SWCs).

When the SwComponentType element is associated with the PortPrototypeInExecutableInstanceRef and the ServiceInstance, if that the type of the port to which the PortPrototypeInExecutableInstanceRef points needs to be consistent with the type of the ServiceInstance is not met, the following prompt information is output: a type of a port associated with a service instance to port prototype mapping is incorrect (The Port type associated with a ServiceInstanceToPortPrototypeMapping is incorrect).

**Table 5**

| Verification element | Associated element | Configuration requirement | Error prompt information |
|---|---|---|---|
| SwCompon entType | Executable | A root software component prototype (RootSwcPrototype) aggregation element of an Executable needs to point to an SWC (root SWC) | An executable file is not associated with a software component type |
| | ServiceInstanceToPortP rototypeMapping An SWC (root SWC) to which a RootSwcPrototype points | An SWC referenced by a port prototype inexecutable instance reference (PortPrototypeInExecutableInst anceRef) aggregation element under a ServiceInstanceToPortPrototyp eMapping is a specified root SWC | A service instance to port prototype mapping needs to be correctly configured with a root software component prototype to associate with an SWC |
| | PortPrototypeInExecuta bleInstanceRef Another associated SWC | A Port to which a PortPrototypeInExecutableInst anceRef points needs to be mounted on an SWC | A service instance to port prototype mapping needs to be associated with a port of an SWC |
| | PortPrototypeInExecuta bleInstanceRef ServiceInstance | A type of a port to which a PortPrototypeInExecutableInst anceRef points needs to be consistent with a type of a ServiceInstance | A type of a port associated with a service instance to port prototype mapping is incorrect |

In other words, when the configuration information of the SwComponentType element does not meet the configuration requirement that is in the AUTOSAR standard and that is preset for the SwComponentType element, the prompt information may further include at least one of the following information: an executable file is not associated with a software component type, a service instance to port prototype mapping needs to be correctly configured with a root software component prototype to associate with an SWC, a service instance to port prototype mapping needs to be associated with a port of an SWC, or a type of a port associated with a service instance to port prototype mapping is incorrect.

It may be understood that, after receiving this type of prompt information, the user may determine that a reason why the service providing node and the service consumption node cannot communicate with each other may alternatively be caused by the configuration information of the SwComponentType element. Further, the communication model may be corrected by verifying the configuration information related to the SwComponentType element in the service providing node and the service consumption node, to obtain a correct communication model.

### 3. Communication instance-level verification

Generally, when the communication model is designed based on the AUTOSAR standard, a port-level element that affects communication in the ARXML file of the communication model includes, for example, configuration information of a service instance (ServiceInstance) element, configuration information of a service interface deployment (ServiceInterfaceDeployment) element, and configuration information of a service instance to machine mapping (ServiceInstanceToMachineMapping) element.
(1) For the configuration information of the ServiceInstance element, as shown in Table 6, a configuration requirement includes: If the ServiceInstance element is associated with the provider service instance (ProviderServiceInstance) and the required service instance (RequiredServiceInstance), the ProviderServiceInstance and the RequiredServiceInstance both need to be of a scalable service-oriented middleware over an internet protocol IP SOME/IP type or a data distribution service DDS protocol type; and if the ProviderServiceInstance and the RequiredServiceInstance are both of the SOME/IP type, InstanceIds of the ProviderServiceInstance and the RequiredServiceInstance need to be the same or an InstanceId of the RequiredServiceInstance needs to be "any"; if the ProviderServiceInstance and the RequiredServiceInstance are both of the DDS type, InstanceIds of the ProviderServiceInstance and the RequiredServiceInstance need to be the same; if the ProviderServiceInstance and the required service instance are both of the DDS type, domain identifiers (DomainIds) of the ProviderServiceInstance and the RequiredServiceInstance need to be the same; or if the ProviderServiceInstance and the RequiredServiceInstance are both of the DDS type, configurations of quality of service QoS files of the ProviderServiceInstance and the RequiredServiceInstance need to be the same.

It may be understood that, when the first configuration information in this application includes the configuration information of the ServiceInstance element, if the configuration information of the ServiceInstance element does not meet the configuration requirement for the configuration information of the ServiceInstance element, the service providing node and the service consumption node cannot normally communicate with each other.

Therefore, as shown in Table 6, in this embodiment, when the ServiceInstance element is associated with the ProviderServiceInstance and the RequiredServiceInstance, if that the ProviderServiceInstance and the RequiredServiceInstance both need to be of the SOME/IP or the data distribution service DDS protocol type is not met, the following prompt information is output: a provider service instance and a required service instance are of different types and need to be set to an SOME/IP type or a DDS type (The instances of a ProvidedServiceInstance and the corresponding RequiredServiceInstance are of different types, they shall be set to either DDS or SOME/IP).

When the ProviderServiceInstance and the RequiredServiceInstance are both of the SOME/IP type, if that the instance identifiers of the ProviderServiceInstance and the RequiredServiceInstance need to be the same or the instance identifier of the required service instance needs to be "any" is not met, or when the ProviderServiceInstance and the RequiredServiceInstance are both of the DDS type, if that the InstanceIds of the ProviderServiceInstance and the RequiredServiceInstance need to be the same is not met, the following prompt information is output: instance identifiers of a provider service instance and a required service instance are inconsistent (The InstanceId attributes of the ProvidedServiceInstance and the corresponding RequiredServiceInstance are inconsistent).

When the ProviderServiceInstance and the RequiredServiceInstance are both of the DDS type, if that the domain identifiers of the ProviderServiceInstance and the RequiredServiceInstance need to be the same is not met, the following prompt information is output: domain identifiers of a provider service instance and a required service instance are inconsistent (The DomainId attributes of the ProvidedServiceInstance and the corresponding RequiredServiceInstance are inconsistent).

When the ProviderServiceInstance and the RequiredServiceInstance are both of the DDS type, if that the configurations of the QoS files need to be the same is not met, the following prompt information is output: configurations of QoS files of a provider service instance and a required service instance are inconsistent (The QoS Profile attributes of the ProvidedServiceInstance and the corresponding RequiredServiceInstance are inconsistent).

**Table 6**

| Verification element | Associated element | Configuration requirement | Error prompt information |
|---|---|---|---|
| ServiceInsta nce | ProviderServiceIn stance and RequiredServiceI nstance | A ProviderServiceInstance and a RequiredServiceInstance both need to be of an SOME/IP type or a DDS type | A provider service instance and a required service instance are of different types and need to be set to an SOME/IP type or a DDS type |
| | | If a ProviderServiceInstance and a RequiredServiceInstance are both of an SOME/IP type, instance IDs (InstanceIds) of the ProviderServiceInstance and the RequiredServiceInstance need to be the same or an InstanceId of the RequiredServiceInstance needs to be "any"; or if the ProviderServiceInstance and the RequiredServiceInstance are both of a DDS type, InstanceIds of the ProviderServiceInstance and the RequiredServiceInstance need to be the same | Instance identifiers of a provider service instance and a required service instance are inconsistent |
| | | If a ProviderServiceInstance and a required service instance are both of a DDS type, domain identifiers (DomainIds) of the ProviderServiceInstance and the RequiredServiceInstance need to be the same | Domain identifiers of a provider service instance and a required service instance are inconsistent |
| | | If a ProviderServiceInstance and a RequiredServiceInstance are both of a DDS type, configurations of QoS files of the ProviderServiceInstance and the RequiredServiceInstance need to be the same | Configurations of QoS files of a provider service instance and a required service instance are inconsistent |

In other words, when the configuration information of the ServiceInstance element does not meet the configuration requirement that is in the AUTOSAR standard and that is preset for the ServiceInstance element, the prompt information may further include at least one of the following information: a provider service instance and a required service instance are of different types and need to be set to a scalable service-oriented middleware over an internet protocol IP SOME/IP type or a data distribution service DDS protocol type, instance identifiers of a provider service instance and a required service instance are inconsistent, domain identifiers of a provider service instance and a required service instance are inconsistent, or configurations of QoS files of a provider service instance and a required service instance are inconsistent.

It may be understood that, after receiving this type of prompt information, the user may determine that a reason why the service providing node and the service consumption node cannot communicate with each other may alternatively be caused by the configuration information of the ServiceInstance element. Further, the communication model may be corrected based on the configuration information related to the ServiceInstance element in the service providing node and the service consumption node, to obtain a correct communication model.

(2) For the configuration information of the ServiceInterfaceDeployment element, as shown in Table 7, a configuration requirement includes: When the ServiceInterfaceDeployment element is associated with the ProviderServiceInstance element and the RequiredServiceInstance element, the provider service instance and the required service instance need to reference a same service interface deployment.

It may be understood that, when the first configuration information in this application includes the configuration information of the ServiceInterfaceDeployment element, if the configuration information of the ServiceInterfaceDeployment element does not meet the configuration requirement of the process design, the service providing node and the service consumption node cannot normally communicate with each other.

Therefore, as shown in Table 7, in this embodiment, if the configuration information of the ServiceInterfaceDeployment does not meet the configuration requirement for the configuration information of the ServiceInterfaceDeployment element, the following prompt information is output: a provider service instance and a required service instance that are associated with a service interface deployment do not reference a same service interface deployment (The instances of a ProvidedServiceInstance and the corresponding RequiredServiceInstance are not associated with the same ServiceInterfaceDeployment).

**Table 7**

| Verification element | Associated element | Configuration requirement | Error prompt information |
|---|---|---|---|
| ServiceInterfaceDeployment | ProviderServiceInstance and RequiredServiceInstance | A provider service instance and a required service instance need to reference a same service interface deployment | A provider service instance and a required service instance that are associated with a service interface deployment do not reference a same service interface deployment |

It may be understood that, after receiving the prompt information, the user may determine that a reason why the service providing node and the service consumption node cannot communicate with each other may alternatively be caused by the configuration information of the ServiceInterfaceDeployment element. Further, the communication model may be corrected by verifying the configuration information related to the ServiceInterfaceDeployment element in the service providing node and the service consumption node, to obtain a correct communication model.

(3) For the configuration information of the ServiceInstanceToMachineMapping element, as shown in Table 8, a configuration requirement includes: A connector referenced by a service instance to machine mapping corresponding to a provider service instance and a required service instance needs to exist in a connector in a machine design.

It may be understood that, when the first configuration information in this application includes the configuration information of the ServiceInterfaceDeployment element, if the configuration information of the ServiceInterfaceDeployment element does not meet the configuration requirement of the process design, the service providing node and the service consumption node cannot normally communicate with each other.

Therefore, as shown in Table 8, in this embodiment, if the configuration information of the ServiceInterfaceDeployment element does not meet the configuration requirement for the configuration information of the ServiceInterfaceDeployment element, the following prompt information is output: an instance is not associated with a service instance to machine mapping, a connector of a service instance to machine mapping cannot be mapped onto an instance, or a service instance to machine mapping is deleted or an instance is deleted from a service instance to machine mapping (The instance is not associated with a ServiceInstanceToMachineMapping. The Connector attribute of a ServiceInstanceToMachineMapping cannot map onto the instance. Delete the Mapping or remove the instance from the Mapping).

**Table 8**

| Verification element | Associated element | Configuration requirement | Error prompt information |
|---|---|---|---|
| ServiceInstanceTo MachineMapping | | A connector referenced by a service instance to machine mapping corresponding to a provider service instance and a required service instance needs to exist in a connector in a machine design | An instance is not associated with a service instance to machine mapping, a connector of a service instance to machine mapping cannot be mapped onto an instance, or a service instance to machine mapping is deleted or an instance is deleted from a service instance to machine mapping |

It may be understood that, after receiving the prompt information, the user may determine that a reason why the service providing node and the service consumption node cannot communicate with each other may alternatively be caused by the configuration information of the ServiceInterfaceDeployment element. Further, the communication model may be corrected by verifying the configuration information related to the ServiceInterfaceDeployment element in the service providing node and the service consumption node, to obtain a correct communication model.

### 4. Machine-level verification

Generally, when the communication model is designed based on the AUTOSAR standard, a Machine-level element that affects communication in the ARXML file of the communication model includes, for example, configuration information of a process to machine mapping set (ProcessToMachineMappingSet) element, configuration information of a machine design (MachineDesign) element, and configuration information of a machine (Machine) element.
(1) For the configuration information of the ProcessToMachineMappingSet element, as shown in Table 9, a configuration requirement includes: When a ProcessToMachineMappingSet element is associated with a process (Process) element, a process to which a process to machine mapping set points needs to exist and be unique.

It may be understood that, when the first configuration information in this application includes the configuration information of the ProcessToMachineMappingSet element, if the configuration information of the ProcessToMachineMappingSet element does not meet the configuration requirement for the configuration information of the ProcessToMachineMappingSet element, the service providing node and the service consumption node cannot normally communicate with each other.

Therefore, as shown in Table 9, in this embodiment, when the ProcessToMachineMappingSet element is associated with the process (Process) element, if that the process to which the process to machine mapping set points needs to exist and be unique is not met, the following prompt information is output: a process is not associated with a process to machine mapping set, a process is associated with a plurality of process to machine mapping sets, or an unwanted process to machine mapping is deleted (The Process is not associated with a ProcessToMachineMapping. The Process is associated with multiple ProcessToMachineMappings, Delete unwanted Mappings).

**Table 9**

| Verification element | Associated element | Configuration requirement | Error prompt information |
|---|---|---|---|
| ProcessToMachine MappingSet | Process | A process to which a process to machine mapping set points needs to exist and be unique | A process is not associated with a process to machine mapping set, a process is associated with a plurality of process to machine mapping sets, or an unwanted process to machine mapping is deleted |

It may be understood that, after receiving this type of prompt information, the user may determine that a reason why the service providing node and the service consumption node cannot communicate with each other may alternatively be caused by the configuration information of the ProcessToMachineMappingSet element. Further, the communication model may be corrected by verifying the configuration information related to the ProcessToMachineMappingSet element in the service providing node and the service consumption node, to obtain a correct communication model.

(2) For the configuration information of the MachineDesign element, as shown in Table 10, a configuration requirement includes: When a MachineDesign element is associated with a process to machine (Machine) element, a Machine needs to point to a specified machine design; or when a MachineDesign element is not associated with another element, a communication connector in the MachineDesign is not empty.

It may be understood that, when the first configuration information in this application includes the configuration information of the MachineDesign element, if the configuration information of the MachineDesign element does not meet the configuration requirement for the configuration information of the MachineDesign element, the service providing node and the service consumption node cannot normally communicate with each other.

Therefore, as shown in Table 10, in this embodiment, when the MachineDesign element is associated with the machine (Machine) element, if that the Machine needs to point to a specified machine design is not met, the following prompt information is output: a machine does not point to a machine design (The Machine is not associated with a MachineDesign).

When the MachineDesign element is not associated with another element, if that the communication connector in the MachineDesign is not empty is not met, the following prompt information is output: there is no communication connector aggregation element, or a machine design cannot configure an instance to machine mapping (Without the CommunicationConnector aggregation element, the MachineDesign cannot configure an InstanceToMachineMapping).

**Table 10**

| Verification element | Associated element | Configuration requirement | Error prompt information |
|---|---|---|---|
| MachineDesign | Machine | A Machine needs to point to a specified machine design | A machine does not point to a machine design |
| | | A communication connector in a MachineDesign is not empty | There is no communication connector aggregation element, or a machine design cannot configure an instance to machine mapping |

It may be understood that, after receiving this type of prompt information, the user may determine that a reason why the service providing node and the service consumption node cannot communicate with each other may alternatively be caused by the configuration information of the MachineDesign element. Further, the communication model may be corrected by verifying the configuration information related to the MachineDesign element in the service providing node and the service consumption node, to obtain a correct communication model.

(3) For the configuration information of the Machine element, as shown in Table 11, a configuration requirement includes: When a Machine element is associated with a process to machine mapping set (ProcessToMachineMappingSet) element and a process (Process) element, a process to machine mapping (ProcessToMachineMapping) in the process to machine mapping set needs to point to a specified process and a machine; or when a machine element is associated with a provider service instance (ProviderServiceInstance) element and a required service instance (RequiredServiceInstance) element, if the ProviderServiceInstance and the RequiredServiceInstance are both of a DDS type and a transmission plug-in is configured with a shared memory SHM, the shared memory SHM cannot be deployed on a plurality of Machines.

It may be understood that, when the first configuration information in this application includes the configuration information of the Machine element, if the configuration information of the Machine element does not meet the configuration requirement for the configuration information of the Machine element, the service providing node and the service consumption node cannot normally communicate with each other.

Therefore, as shown in Table 11, in this embodiment, when the Machine element is associated with the ProcessToMachineMappingSet element and the Process, if that the ProcessToMachineMapping needs to point to a specified process and a machine is not met, the following prompt information is output: a process to machine mapping is not associated with a machine (The ProcessToMachineMapping is not associated with a Machine).

When the ProviderServiceInstance and the RequiredServiceInstance are both of the DDS type and the transmission plug-in is configured with the shared memory SHM, if the configuration requirement that the shared memory SHM cannot be deployed on a plurality of Machines is not met, the following prompt information is output: an SHM of a DDS cannot communicate with a plurality of machines (The SHM of DDS cannot communicate with multiple Machine).

**Table 11**

| Verification element | Associated element | Configuration requirement | Error prompt information |
|---|---|---|---|
| Machine | ProcessToMachine MappingSet Process | A ProcessToMachineMapping needs to point to a specified process and a machine. | A process to machine mapping is not associated with a machine. |
| | | If a ProviderServiceInstance and a RequiredServiceInstance are both of a DDS type and a transmission plug-in is configured with a shared memory SHM, the shared memory SHM cannot be deployed on a plurality of Machines | An SHM of a DDS cannot communicate with a plurality of machines |

It may be understood that, after receiving this type of prompt information, the user may determine that a reason why the service providing node and the service consumption node cannot communicate with each other may alternatively be caused by the configuration information of the Machine element. Further, the communication model may be corrected by verifying the configuration information related to the Machine element in the service providing node and the service consumption node, to obtain a correct communication model.

In this embodiment, when verifying whether the service providing node and the service consumption node in the communication model can normally communicate with each other, the verification apparatus obtains, from the ARXML file of the communication model, information (namely, the first configuration information) configured for implementing the communication function between the service providing node and the service consumption node. In other words, it may be considered that the verification apparatus obtains, from the ARXML file of the communication model, some configuration information associated with the communication between the service providing node and the service consumption node, then verifies, based on the first configuration information and the configuration requirement that is for implementing the communication function between the service providing node and the service consumption node and that is specified in the system architecture standard to which the communication model is applied, whether the service providing node and the service consuming node can normally communicate with each other and outputs the prompt information to a user to indicate whether the service providing node and the service consumption node can normally communicate with each other.

Optionally, in the method for verifying a communication node in a communication model provided in this application, the verification apparatus may further receive first information, where the first information indicates at least one communication instance pair, and each communication instance pair includes a service consumption node and a service providing node that need to communicate with each other. Then, the verification apparatus outputs the prompt information based on the preset configuration requirement and the first configuration information corresponding to the service providing node and the service consumption node in each communication instance pair.

During specific implementation, the verification apparatus may receive the first information entered by the user on an interaction interface, to obtain each communication instance pair that needs to be verified.

For example, the verification apparatus may provide a first window for the user. The first window is used by the user to select a service providing node and a service consumption node that need to be verified.

For example, the verification apparatus may further provide a second window for the user, where the second window is used by the user to select a service providing node in the communication model. Then, after the user selects the service providing node in the second window, the verification apparatus provides a selector for the user, where the selector is used by the user to simultaneously select a plurality of service consumption nodes that need to communicate with the service providing node previously selected in the second window. Alternatively, after the user selects the service providing node in the second window, the verification apparatus provides a third window for the user. The third window includes three options: a same instance ID option, a same domain ID option, and a same service interface ID option. If the user selects an option, the verification apparatus uses all service consumption nodes that meet a condition of this option as verification objects.

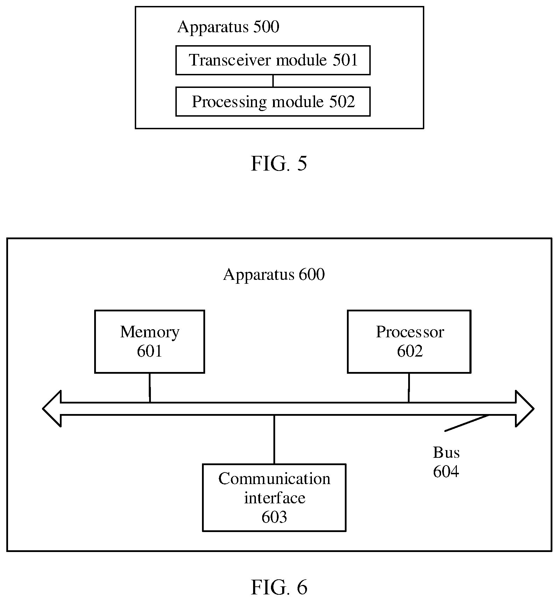

The foregoing describes the method for verifying a communication node in the communication model provided in this application with reference to FIG. 3 to FIG. 4. The following describes an apparatus for verifying a communication node in a communication model provided in this application with reference to FIG. 5 and FIG. 6.

FIG. 5 is a diagram of a structure of an apparatus for verifying a communication node in a communication model according to an embodiment of this application. Specifically, as shown in FIG. 5, the apparatus includes an obtaining module 501 and a processing module 502.

Specifically, the obtaining module 501 is configured to obtain first configuration information from a configuration file of the communication model, where the communication model includes a service providing node and a service consumption node, and the first configuration information includes information configured for implementing communication between the service providing node and the service consumption node. The processing module 502 is configured to output prompt information based on the first configuration information and a preset configuration requirement, where the prompt information indicates whether the service providing node and the service consumption node are capable of normally communicating with each other, and the preset configuration requirement includes a configuration requirement that is for implementing a communication function between the service providing node and the service consumption node and that is specified in a system architecture standard to which the communication model is applied. The system architecture standard is an automotive open system architecture AUTOSAR, and the configuration file of the communication model is an ARXML file.

In other words, when verifying whether the service providing node and the service consumption node in the communication model can normally communicate with each other, the verification apparatus 500 obtains, from the ARXML file of the communication model, the information (namely, the first configuration information) configured for implementing the communication function between the service providing node and the service consumption node. In other words, it may be considered that the verification apparatus obtains, from the ARXML file of the communication model, some configuration information associated with the communication between the service providing node and the service consumption node, then verifies, based on the first configuration information and the configuration requirement that is for implementing the communication function between the service providing node and the service consumption node and that is specified in the system architecture standard to which the communication model is applied, whether the service providing node and the service consuming node can normally communicate with each other and outputs the prompt information to a user to indicate whether the service providing node and the service consumption node can normally communicate with each other.

In a possible implementation, the obtaining module 501 is further configured to receive first information, where the first information indicates at least one communication instance pair, and each communication instance pair includes a service consumption node and a service providing node that need to communicate with each other; and the processing module 502 is specifically configured to output the prompt information based on the preset configuration requirement and the first configuration information corresponding to the service providing node and the service consumption node in each communication instance pair.

In this implementation, the verification apparatus 500 may learn, based on the first information that is entered by the user on an interaction interface and that indicates the at least one communication instance pair, the service providing node and the service consumption node that need to be verified by the user.

In a possible implementation, the first configuration information includes configuration information of a service interface element; and when the configuration information of the service interface element does not meet a configuration requirement that is in the AUTOSAR standard and that is preset for the configuration information of the service interface element, the prompt information specifically indicates at least one of the following information: a port and a service interface deployment need to reference a same service interface, or a service interface element needs to be configured with at least one of three communication modes: an event, a method, or a field.

In this implementation, when the verification apparatus 500 outputs this type of prompt information, the user may determine, based on the prompt information, that the service providing node and the service consumption node cannot normally communicate with each other, and that a reason why the service providing node and the service consumption node cannot normally communicate with each other may be related to the configuration information of the service interface element. Further, the user may verify, based on the prompt information, the configuration information related to the service interface element in the service providing node and the service consumption node, to obtain a correct communication model.

In a possible implementation, the first configuration information includes configuration information of a process design element; and when the configuration information of the process design element does not meet a configuration requirement that is in the AUTOSAR standard and that is preset for the configuration information of the process design element, the prompt information specifically indicates that a process does not point to a process design.

In this implementation, when the verification apparatus 500 outputs this type of prompt information, the user may determine, based on the prompt information, that the service providing node and the service consumption node cannot normally communicate with each other, and that a reason why the service providing node and the service consumption node cannot normally communicate with each other may be related to the configuration information of the process design element. Further, the user may verify, based on the prompt information, the configuration information related to the process design element in the service providing node and the service consumption node, to obtain a correct communication model.

In a possible implementation, the first configuration information includes configuration information of an executable file element; and when the configuration information of the executable file element does not meet a configuration requirement that is in the AUTOSAR standard and that is preset for the configuration information of the executable file element, the prompt information specifically indicates at least one of the following information: a process and a process design do not point to a same executable file, or an executable file does not have a root software component prototype aggregation element.

In this implementation, when the verification apparatus 500 outputs the prompt information, the user may determine, based on the prompt information, that the service providing node and the service consumption node cannot normally communicate with each other, and that a reason why the service providing node and the service consumption node cannot normally communicate with each other may be related to the configuration information of the executable file element. Further, the user may verify, based on the prompt information, the configuration information related to the executable file element in the service providing node and the service consumption node, to obtain a correct communication model.

In a possible implementation, the first configuration information includes configuration information of a service instance to port prototype mapping element; and when the configuration information of the service instance to port prototype mapping element does not meet a configuration requirement that is in the AUTOSAR standard and that is preset for the configuration information of the service instance to port prototype mapping element, the prompt information specifically indicates at least one of the following information: an instance is not associated with a service instance to port prototype mapping, an instance is associated with one or more redundant service instance to port prototype mappings, a redundant mapping is deleted, or a service instance to port prototype mapping does not have a port prototype inexecutable instance reference aggregation element.

In this implementation, when the verification apparatus 500 outputs this type of prompt information, the user may determine, based on the prompt information, that the service providing node and the service consumption node cannot normally communicate with each other, and that a reason why the service providing node and the service consumption node cannot normally communicate with each other may be related to the configuration information of the service instance to port prototype mapping element. Further, the user may verify, based on the prompt information, the configuration information related to the service instance to port prototype mapping element in the service providing node and the service consumption node, to obtain a correct communication model.

In a possible implementation, the first configuration information includes configuration information of a software component type element; and when the configuration information of the software component type element does not meet a configuration requirement that is in the AUTOSAR standard and that is preset for the configuration information of the software component type element, the prompt information specifically indicates at least one of the following information: an executable file is not associated with a software component type, a service instance to port prototype mapping needs to be correctly configured with a root software component prototype to associate with an SWC, a service instance to port prototype mapping needs to be associated with a port of an SWC, or a type of a port associated with a service instance to port prototype mapping is incorrect.

In this implementation, when the verification apparatus 500 outputs this type of prompt information, the user may determine, based on the prompt information, that the service providing node and the service consumption node cannot normally communicate with each other, and that a reason why the service providing node and the service consumption node cannot normally communicate with each other may be related to the configuration information of the software component type element. Further, the user may verify, based on the prompt information, the configuration information related to the software component type element in the service providing node and the service consumption node, to obtain a correct communication model.

In a possible implementation, the first configuration information includes configuration information of a service instance element; and when the configuration information of the service instance element does not meet a configuration requirement that is in the AUTOSAR standard and that is preset for the configuration information of the service instance element, the prompt information specifically indicates at least one of the following information: a provider service instance and a required service instance are of different types and need to be set to a scalable service-oriented middleware over an internet protocol IP SOME/IP type or a data distribution service DDS protocol type, instance identifiers of a provider service instance and a required service instance are inconsistent, domain identifiers of a provider service instance and a required service instance are inconsistent, or configurations of QoS files of a provider service instance and a required service instance are inconsistent.

In this implementation, when the verification apparatus 500 outputs the prompt information, the user may determine, based on the prompt information, that the service providing node and the service consumption node cannot normally communicate with each other, and that a reason why the service providing node and the service consumption node cannot normally communicate with each other may be related to the configuration information of the service instance element. Further, the user may verify, based on the prompt information, the configuration information related to the service instance element in the service providing node and the service consumption node, to obtain a correct communication model.

In a possible implementation, the first configuration information includes configuration information of a service interface deployment element; and when the configuration information of the service interface deployment element does not meet a configuration requirement that is in the AUTOSAR standard and that is preset for the configuration information of the service interface deployment element, the prompt information specifically indicates at least one of the following information: a provider service instance and a required service instance that are associated with a service interface deployment do not reference a same service interface deployment.

In this implementation, when the verification apparatus 500 outputs this type of prompt information, the user may determine, based on the prompt information, that the service providing node and the service consumption node cannot normally communicate with each other, and that a reason why the service providing node and the service consumption node cannot normally communicate with each other may be related to the configuration information of the service interface deployment element. Further, the user may verify, based on the prompt information, the configuration information related to the service interface deployment element in the service providing node and the service consumption node, to obtain a correct communication model.

In a possible implementation, the first configuration information includes configuration information of a service instance to machine mapping element; and when the configuration information of the service instance to machine mapping element does not meet a configuration requirement that is in the AUTOSAR standard and that is preset for the configuration information of the service instance to machine mapping element, the prompt information specifically indicates at least one of the following information: an instance is not associated with a service instance to machine mapping, a connector of a service instance to machine mapping cannot be mapped onto an instance, or a service instance to machine mapping is deleted or an instance is deleted from a service instance to machine mapping.

In this implementation, when the verification apparatus 500 outputs this type of prompt information, the user may determine, based on the prompt information, that the service providing node and the service consumption node cannot normally communicate with each other, and that a reason why the service providing node and the service consumption node cannot normally communicate with each other may be related to the configuration information of the service instance to machine mapping element. Further, the user may verify, based on the prompt information, the configuration information related to the service instance to machine mapping element in the service providing node and the service consumption node, to obtain a correct communication model.

In a possible implementation, the first configuration information includes configuration information of a process to machine mapping set element; and when the configuration information of the process to machine mapping set element does not meet a configuration requirement that is in the AUTOSAR standard and that is preset for the configuration information of the process to machine mapping set element, the prompt information specifically indicates at least one of the following information: a machine is not associated with a machine design, there is no communication connector aggregation element, or a machine design cannot configure an instance to machine mapping.

In this implementation, when the verification apparatus 500 outputs this type of prompt information, the user may determine, based on the prompt information, that the service providing node and the service consumption node cannot normally communicate with each other, and that a reason why the service providing node and the service consumption node cannot normally communicate with each other may be related to the configuration information of the process to machine mapping set element. Further, the user may verify, based on the prompt information, the configuration information related to the process to machine mapping set element in the service providing node and the service consumption node, to obtain a correct communication model.

In a possible implementation, the first configuration information includes configuration information of a machine design element; and when the configuration information of the machine design element does not meet a configuration requirement that is in the AUTOSAR standard and that is preset for the configuration information of the machine design element, the prompt information specifically indicates at least one of the following information: there is no communication connector aggregation element, or a machine design cannot configure an instance to machine mapping.

In this implementation, when the verification apparatus 500 outputs the prompt information, the user may determine, based on the prompt information, that the service providing node and the service consumption node cannot normally communicate with each other, and that a reason why the service providing node and the service consumption node cannot normally communicate with each other may be related to the configuration information of the machine design element. Further, the user may verify, based on the prompt information, the configuration information related to the machine design element in the service providing node and the service consumption node, to obtain a correct communication model.

In a possible implementation, the first configuration information includes configuration information of a machine element; and when the configuration information of the machine element does not meet a configuration requirement that is in the AUTOSAR standard and that is preset for the configuration information of the machine element, the prompt information specifically indicates at least one of the following information: a process to machine mapping is not associated with a machine, or an SHM of a DDS cannot communicate with a plurality of machines.

In this implementation, when the verification apparatus 500 outputs the prompt information, the user may determine, based on the prompt information, that the service providing node and the service consumption node cannot normally communicate with each other, and that a reason why the service providing node and the service consumption node cannot normally communicate with each other may be related to the configuration information of the machine element. Further, the user may verify, based on the prompt information, the configuration information related to the machine element in the service providing node and the service consumption node, to obtain a correct communication model.

FIG. 6 is a diagram of a structure of an apparatus for verifying a communication node in a communication model according to another embodiment of this application. The apparatus shown in FIG. 6 may be configured to perform the method according to any one of the foregoing embodiments.

As shown in FIG. 6, the apparatus 600 in this embodiment includes a memory 601 and a processor 602. Optionally, the apparatus 600 further includes a communication interface 603 and a bus 604. Communication connections between the memory 601, the processor 602, and the communication interface 603 are implemented through the bus 604.

The memory 601 may be a read only memory (read only memory, ROM), a static storage device, a dynamic storage device, or a random access memory (random access memory, RAM). The memory 601 may store a program. When the program stored in the memory 601 is executed by the processor 602, the processor 602 is configured to perform steps of the method shown in FIG. 3.

The processor 602 may be a general-purpose central processing unit (central processing unit, CPU), a microprocessor, an application-specific integrated circuit (application-specific integrated circuit, ASIC), one or more integrated circuits, a general-purpose processor, a digital signal processor (digital signal processor, DSP), a field programmable gate array (field programmable gate array, FPGA) or another programmable logic device, a discrete gate or transistor logic device, or a discrete hardware component. The processor 602 is configured to execute a related program, to implement the method shown in FIG. 3 in this application.

The processor 602 may alternatively be an integrated circuit chip and has a signal processing capability. In an implementation process, the steps of the method in FIG. 3 in embodiments of this application may be completed by using an integrated logic circuit of hardware or instructions in a form of software in the processor 602.

The communication interface 603 may use, but not limited to, a transceiver apparatus of a transceiver type, to implement communication between the apparatus 600 and another device or a communication network.

The bus 604 may include a channel on which information is transmitted between the components (for example, the memory 601, the processor 602, and the communication interface 603) of the apparatus 600.

It should be understood that, the apparatus 600 shown in this embodiment of this application may be an electronic device, or may be a chip configured in an electronic device.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may indicate an "and/or" relationship. For details, refer to the context for understanding.

In this application, at least one means one or more, and a plurality of means two or more. "At least one of the following items (pieces)" or a similar expression thereof refers to any combination of these items, including any combination of singular items (pieces) or plural items (pieces). For example, at least one item (piece) of a, b, and c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for verifying a communication node in a communication model, wherein the communication node comprises a service providing node and a service consumption node, and the method comprises:
obtaining, by a verification apparatus, first configuration information from a configuration file of the communication model, wherein the first configuration information comprises information configured for implementing communication between the service providing node and the service consumption node; and
outputting, by the verification apparatus, prompt information based on the first configuration information and a preset configuration requirement, wherein the prompt information indicates whether the service providing node and the service consumption node are capable of normally communicating with each other, and the preset configuration requirement comprises a configuration requirement that is for implementing a communication function between the service providing node and the service consumption node and that is specified in a system architecture standard to which the communication model is applied, wherein
the system architecture standard is an automotive open system architecture AUTOSAR, and the configuration file of the communication model is an ARXML file.

2. The method according to claim 1, wherein the method further comprises:
receiving, by the verification apparatus, first information, wherein the first information indicates at least one communication instance pair, and each communication instance pair comprises a service consumption node and a service providing node that need to communicate with each other; and
the outputting, by the verification apparatus, prompt information based on the first configuration information and a preset configuration requirement comprises:
outputting, by the verification apparatus, the prompt information based on the preset configuration requirement and the first configuration information corresponding to the service providing node and the service consumption node in each communication instance pair.

3. The method according to claim 2, wherein the first configuration information comprises configuration information of a service interface element; and
when the configuration information of the service interface element does not meet a configuration requirement that is in the AUTOSAR standard and that is preset for the configuration information of the service interface element, the prompt information specifically indicates at least one of the following information: a port and a service interface deployment need to reference a same service interface, or a service interface element needs to be configured with at least one of three communication modes: an event, a method, or a field.

4. The method according to claim 3, wherein the first configuration information comprises configuration information of a process design element; and
when the configuration information of the process design element does not meet a configuration requirement that is in the AUTOSAR standard and that is preset for the configuration information of the process design element, the prompt information specifically indicates that a process does not point to a process design.

5. The method according to claim 3 or 4, wherein the first configuration information comprises configuration information of an executable file element; and
when the configuration information of the executable file element does not meet a configuration requirement that is in the AUTOSAR standard and that is preset for the configuration information of the executable file element, the prompt information specifically indicates at least one of the following information: a process and a process design do not point to a same executable file, or the executable file does not have a root software component prototype aggregation element.

6. The method according to any one of claims 3 to 5, wherein the first configuration information comprises configuration information of a service instance to port prototype mapping element; and
when the configuration information of the service instance to port prototype mapping element does not meet a configuration requirement that is in the AUTOSAR standard and that is preset for the configuration information of the service instance to port prototype mapping element, the prompt information specifically indicates at least one of the following information: an instance is not associated with a service instance to port prototype mapping, an instance is associated with one or more redundant service instance to port prototype mappings, a redundant mapping is deleted, or a service instance to port prototype mapping does not have a port prototype inexecutable instance reference aggregation element.

7. The method according to any one of claims 3 to 6, wherein the first configuration information comprises configuration information of a software component type element; and
when the configuration information of the software component type element does not meet a configuration requirement that is in the AUTOSAR standard and that is preset for the configuration information of the software component type element, the prompt information specifically indicates at least one of the following information: an executable file is not associated with a software component type, a service instance to port prototype mapping needs to be correctly configured with a root software component prototype to associate with an SWC, a service instance to port prototype mapping needs to be associated with a port of an SWC, or a type of a port associated with a service instance to port prototype mapping is incorrect.

8. The method according to any one of claims 3 to 7, wherein the first configuration information comprises configuration information of a service instance element;
when the configuration information of the service instance element does not meet a configuration requirement that is in the AUTOSAR standard and that is preset for the configuration information of the service instance element, the prompt information specifically indicates at least one of the following information: a provider service instance and a required service instance are of different types and need to be set to a scalable service-oriented middleware over an internet protocol IP SOME/IP type or a data distribution service DDS protocol type, instance identifiers of a provider service instance and a required service instance are inconsistent, domain identifiers of a provider service instance and a required service instance are inconsistent, or configurations of QoS files of a provider service instance and a required service instance are inconsistent.

9. The method according to any one of claims 3 to 8, wherein the first configuration information comprises configuration information of a service interface deployment element; and
when the configuration information of the service interface deployment element does not meet a configuration requirement that is in the AUTOSAR standard and that is preset for the configuration information of the service interface deployment element, the prompt information specifically indicates at least one of the following information: a provider service instance and a required service instance that are associated with a service interface deployment do not reference a same service interface deployment.

10. The method according to any one of claims 3 to 9, wherein the first configuration information comprises configuration information of a service instance to machine mapping element; and
when the configuration information of the service instance to machine mapping element does not meet a configuration requirement that is in the AUTOSAR standard and that is preset for the configuration information of the service instance to machine mapping element, the prompt information specifically indicates at least one of the following information: an instance is not associated with a service instance to machine mapping, a connector of a service instance to machine mapping cannot be mapped onto an instance, or a service instance to machine mapping is deleted or an instance is deleted from a service instance to machine mapping.

11. The method according to any one of claims 3 to 10, wherein the first configuration information comprises configuration information of a process to machine mapping set element; and
when the configuration information of the process to machine mapping set element does not meet a configuration requirement that is in the AUTOSAR standard and that is preset for the configuration information of the process to machine mapping set element, the prompt information specifically indicates at least one of the following information: a machine is not associated with a machine design, there is no communication connector aggregation element, or a machine design cannot configure an instance to machine mapping.

12. The method according to any one of claims 3 to 11, wherein the first configuration information comprises configuration information of a machine design element; and
when the configuration information of the machine design element does not meet a configuration requirement that is in the AUTOSAR standard and that is preset for the configuration information of the machine design element, the prompt information specifically indicates at least one of the following information: there is no communication connector aggregation element, or a machine design cannot configure an instance to machine mapping.

13. The method according to any one of claims 3 to 12, wherein the first configuration information comprises configuration information of a machine element; and
when the configuration information of the machine element does not meet a configuration requirement that is in the AUTOSAR standard and that is preset for the configuration information of the machine element, the prompt information specifically indicates at least one of the following information: a process to machine mapping is not associated with a machine, or an SHM of a DDS cannot communicate with a plurality of machines.

14. An apparatus for verifying a communication node in a communication model, comprising a module configured to perform the method according to any one of claims 1 to 13.

15. An apparatus for verifying a communication node in a communication model, comprising a memory and a processor, wherein
the memory is configured to store program instructions; and
the processor is configured to invoke the program instructions in the memory to perform the method according to any one of claims 1 to 13.

16. A computer-readable medium, wherein the computer-readable medium stores program code to be executed by a computer, and the program code comprises instructions used to perform the method according to any one of claims 1 to 13.

17. A chip, comprising at least one processor and a communication interface, wherein the communication interface and the at least one processor are interconnected through a line, and the at least one processor is configured to run a computer program or instructions, to perform the method according to any one of claims 1 to 13.

18. A computer program product, wherein the computer program product comprises computer program instructions, and when the computer program instructions are run on a computer, the computer is enabled to perform the method according to any one of claims 1 to 13.
